# FASCICULE DE BREVET EUROPEEN

(11) **EP 1 451 659 B1**
(45) Date de publication et mention de la délivrance du brevet: **16.08.2006**
(21) Numéro de dépôt: 02799093.6
(22) Date de dépôt: 06.12.2002
(51) Int. Cl.: G05G 9/04

(54) **ORGANE DE COMMANDE A CABLES TENDUS**
STEUERGLIED MIT ANGESPANNTEN KABELN
CONTROL MEMBER WITH TENSED CABLES

(30) Priorité: 10.12.2001 FR 0115913
(43) Date de publication de la demande: 01.09.2004
(73) Titulaire: COMMISSARIAT A L'ENERGIE ATOMIQUE, 75752 Paris 15ème (FR)
(72) Inventeur: GOSSELIN, Florian, F-92260 Fontenay aux Roses (FR)
(74) Mandataire: Poulin, Gérard
(86) Numéro de dépôt international: PCT/FR2002/004208
(87) Numéro de publication internationale: WO 2003/050639

(56) Documents cités:
- US-A- 3 893 449
- US-A- 4 820 162
- US-A- 5 228 356
- ISHII M ET AL: "A 3D interface device with force feedback: a virtual work space for pick-and-place tasks" VIRTUAL REALITY ANNUAL INTERNATIONAL SYMPOSIUM, 1993., 1993 IEEE SEATTLE, WA, USA 18-22 SEPT. 1993, NEW YORK, NY, USA,IEEE, 18 septembre 1993 (1993-09-18), pages 331-335, XP010130475 ISBN: 0-7803-1363-1

## Description

Le sujet de cette invention est un organe de commande dont un élément essentiel est un groupe de câbles tendus.

Les organes de commande ou bras maîtres connus, utilisés dans divers domaines, reposent sur des mécanismes différents (voir par exemple US-A-4 820 162). On a ainsi proposé des bras composés de tronçons articulés successifs, qui présentent cependant une certaine complexité, une inertie notable, et des singularités cinématiques qui limitent les mouvements qu'on peut leur infliger. C'est pourquoi des organes d'autres genres ont encore été proposés.

Ainsi, un organe de commande connu comprend un élément de manoeuvre, en forme de dé à coudre et dans lequel l'utilisateur introduit une phalangette, et qui est suspendu à quatre câbles tendus qui sont, dans la réalisation proposée par les auteurs, déroulés des sommets d'un tétraèdre régulier, ou encore sur quatre des sommets d'un cube, toujours diamétralement opposés sur des facettes du cube. Les moteurs de retour d'efforts, qui assurent la mise en tension des câbles, sont disposés à ces sommets. En déplaçant le dé, l'utilisateur modifie les longueurs déroulées des câbles, et les mesures correspondantes permettent d'accomplir la commande souhaitée. Ce mécanisme est simple et commode mais présente l'inconvénient d'être encombrant, les câbles s'étendant de tous côtés du dé.

L'invention propose un nouvel agencement d'organe de commande dont la structure est simple et peu coûteuse et qu'on puisse facilement doter d'une raideur satisfaisante. Sous sa forme plus générale, l'organe de commande du type à câbles tendus, disposé entre une embase généralement fixe et un poignet mobile comprend : une gaine jointe à l'embase par une articulation double ; trois câbles d'actionnement entre la gaine et l'embase et se raccordant à l'embase en autant de points de raccordement entourant la gaine ; un bras porteur du poignet, coulissant dans la gaine ; et au moins un moyen de d'actionnement entre le bras et la gaine , les câbles et le moyen d'actionnement assurant le contrôle de mouvements de l'organe. Au sens de l'invention les câbles et moyens d'actionnement assurent le contrôle actif de mouvements de l'organe, c'est-à-dire que leur longueur libre, ou plus généralement leur état, est variable, mais qu'ils maintiennent l'organe à une position fixe au repos et opposent une certaine résistance aux mouvements de l'organe imposés par l'utilisateur, afin d'apporter à l'organe une raideur qui permet une commande plus agréable et plus précise. Le moyen usuel dans cette technique consiste en un moteur dit à retour d'effort, le plus souvent muni d'un codeur qui mesuré ses mouvements et les transmet à l'engin commandé par l'organe, pour alors contribuer aussi à la commande.

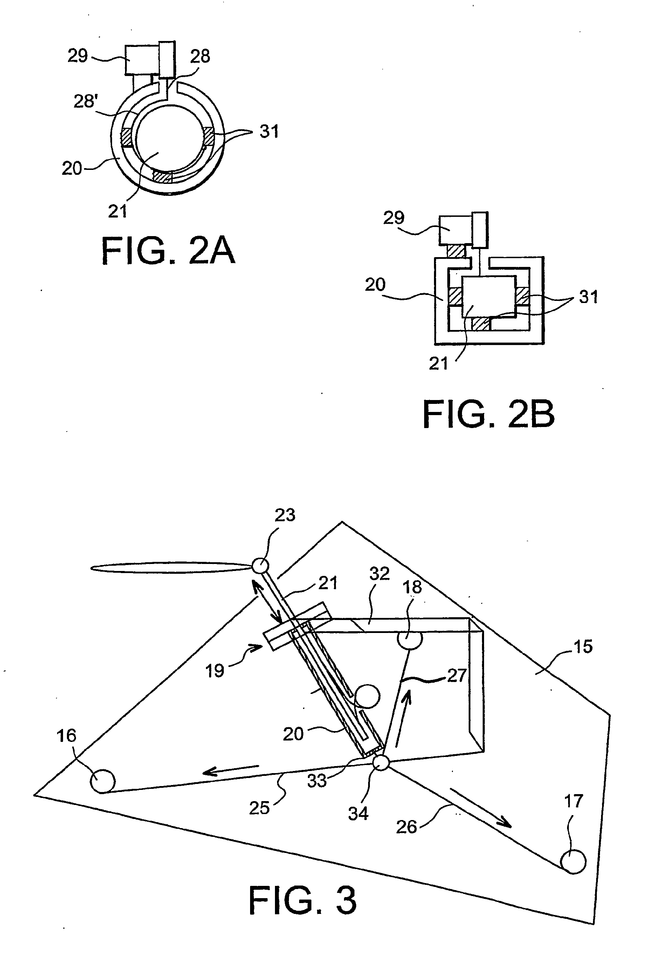

L'invention sera maintenant décrite en détail au moyen des figures suivantes :

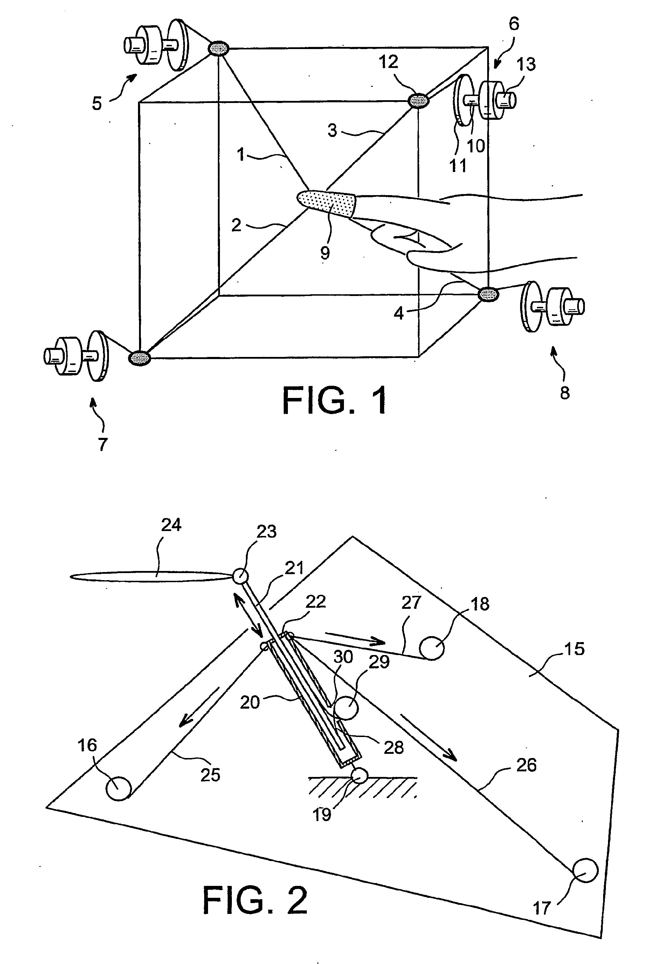

- la figure 1 représente l'organe de commande à câble connu précédemment décrit,
- les quatres figures 2, 3, 4, et 5 représentent autant de modes de réalisation de l'invention, et les figures 2A et 2B sont deux coupes à travers l'organe dans la réalisation de la figure 2, d'après deux variantes de réalisation.

La figure 1 représente donc quatre câbles 1 à 4 semblables et se déroulant de moteurs respectifs 5 à 8 placés aux coins d'un tétraèdre régulier et tous posés sur une embase fixe non représentée. Les câbles 1 à 4 convergent vers un dé 9 dans lequel un opérateur engage le doigt et qu'il déplace à la position voulue en modifiant les longueurs déroulées des câbles 1 à 4. Un tel système est décrit plus complètement dans l'article "A 3D Spacial Interface Device Using Tensed Strings" par Ishii et Sato paru dans la revue "Presence" (volume 3, numéro 1, hiver 1994, aux pages 81 à 86). Les auteurs mentionnent aussi qu'on peut perfectionner ce système en le dédoublant dans le même espace et en plaçant un autre dé dont les câbles seraient déroulés de moteurs placés aux quatre sommets inoccupés du cube et dans lequel l'opérateur introduirait un autre doigt de la main, notamment le pouce.

L'agencement des quatre moteurs est identique : c'est ainsi que le moteur 6 (seul représenté complètement) comprend un arbre de sortie 10 qui fait tourner une poulie 11 dans laquelle le câble 3 est enroulé ; le câble 3 passe par une filière 12 (au sommet du tétraèdre) qui lui donne un point fixe, et un codeur d'angle 13 est relié à l'arbre de sortie 10 pour suivre ses mouvements et les communiquer à l'engin commandé par l'organe.

Dans la première réalisation de l'invention de la figure 2, l'embase de l'organe de commande porte la référence 15 ; elle est plane et porte trois moteurs d'actionnemnt 16, 17 et 18 analogues aux moteurs déjà rencontrés, ainsi qu'une articulation double 19 reliée à une gaine 20. Un bras 21 coulisse dans la gaine 20 et en sort par une extrémité ouverte 22 de celle-ci, qui est opposée à l'articulation double 19. L'extrémité libre du bras 20 porte un poignet 23, c'est-à-dire une articulation double ou triple qui permet d'incliner un élément 24 tenu par l'opérateur, tel qu'un stylo, dans toutes les directions et éventuellement de le faire pivoter. Aux moteurs 16, 17 et 18 sont associés des câbles 25, 26 et 27 qui sont tendus depuis un point de raccordement à l'embase 15, pouvant être formé par une filière connue, telle que 12, jusqu'à l'extrémité ouverte 22 de la gaine 20, où ils y sont accrochés en formant un réseau en arêtes de pyramide. Il existe un quatrième câble 28 logé dans la gaine 20 et courant le long du bras 21, où il est accroché par ses extrémités. Il forme cependant une boucle à un endroit où il est enroulé autour d'une poulie d'un quatrième moteur 29 fixé à la gaine 20, sur sa face extérieure; en traversant une fente 30 de la gaine 20 percée à cet endroit. On voit que le quatrième câble 28, tendu entre la gaine 20 et le bras 21, et son moteur 29 forment ensemble un moyen d'actionnement entre la gaine 20 et le bras 21. Des patins 31 de glissement ou tout autre moyen adéquat, visibles à la figure 2B, sont disposés entre la gaine 20 et le bras 21 pour permettre un mouvement coulissant guidé.

Le système composé des câbles de la gaine 20 et du bras 21 est un organe de commande à trois degrés de liberté, c'est-à-dire qu'il permet de placer le poignet 23 à n'importe quel point d'un volume de travail. Les moteurs 16 à 18 et 29 et les câbles 25 à 28 permettent de maintenir l'organe de commande à la position qu'il a atteinte tout en instaurant une raideur agréable à l'opérateur pendant les déplacements. Les trois premiers câbles 25, 26, et 27 maintiennent la gaine 20 et le bras 21 à l'inclinaison qui leur a été donnée sur l'embase 15 selon les deux premiers degrés de liberté de l'organe, et le quatrième câble 28 maintient le degré d'enfoncement donné au bras 21 dans la gaine 20 selon le troisième degré de liberté de l'organe. Comme on l'a déjà mentionné, le poignet 23 peut être muni aussi de moteurs de retour d'effort qui permettent de commander des degrés de liberté supplémentaires liés à l'inclinaison du stylo 24. Il peut aussi devenir utile d'autoriser le pivotement du bras 21. La gaine 20 pourrait alors pivoter avec le bras 21 en remplaçant l'articulation double 19 en joint de cardan qui ne permet que d'ajuster l'inclinaison de la gaine 20 sur l'embase 15 par une articulation triple en rotule. Afin d'interdire des pivotements du bras 21 dans la gaine 20, et des dommages au câble 28, il est prévu de leur donner les sections polygonales illustrées à la figure 2B.

Au contraire, la figure 2A représente une variante de réalisation où la gaine 20 et un bras 21 ont des sections rondes et concentriques pour permettre au bras de pivoter ; si un retour d'effort est souhaité selon ce pivotement, le quatrième câble 28 peut s'enrouler à une extrémité au moins autour du bras 21, en avant des patins 31. Il comporte au moins une spire 28' à cet endroit. Un degré de liberté a ainsi été ajouté. Des mouvements à retour d'effort de translation et de rotation peuvent aussi être obtenus simultanément moyennant l'utilisation d'un moteur supplémentaire.

Dans ce mode de réalisation, l'espace pour l'utilisateur est bien dégagé puisque tous les câbles s'étendent au-dessous de lui ; mais la raideur de commande reste un peu faible, ce qui justifie l'aménagement un peu différent de la figure 3. Là, l'articulation double 19 (ou la rotule) et les points d'accrochage des trois premiers câbles 25, 26 et 27 à la gaine 20 ont été intervertis, c'est-à-dire que l'articulation double 19 se trouve désormais près de l'extrémité ouverte 22 de la gaine 20, accrochée à un support 32 en forme de potence de l'embase 15, et que l'extrémité inférieure 33 de la gaine 20 porte un point d'accrochage 34 des câbles 25, 26 et 27, qui sont désormais sensiblement coplanaires. Il apparaît immédiatement que les efforts exercés par l'utilisateur sur le poignet 23 produisent un moment plus faible puisque le bras de levier est réduit à la longueur libre du bras 21, et que la résistance des moteurs 16 à 18 est plus difficile à vaincre. De plus, l'angle de la gaine 20 et des câbles 25 à 27 est en général plus grand que dans le mode de réalisation précédent, de sorte que leur tension exerce un moment plus grand. Ces deux différences donnent une plus grande raideur à l'organe de commande. On notera aussi qu'il est possible que des mouvements angulaires de basculement plus importants soient communiqués au poignet 23, et que l'espace de travail est plus dégagé en raison de l'éloignement plus grand entre les trois premiers câbles 25 à 27 et le poignet 23. On peut aussi placer les moteurs 16 à 18 au-dessus de l'extrémité 33, ce qui permet de plus grands débattements en rotation au prix d'un encombrement plus important.

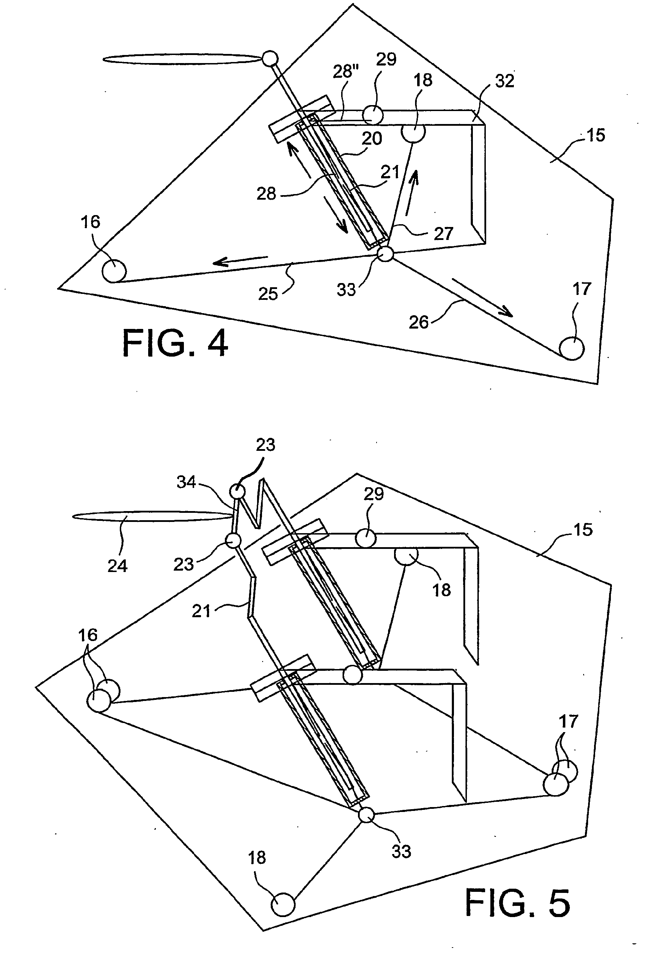

Dans le mode de réalisation de la figure 4, on a repris la conception d'ensemble de la figure 3, mais le quatrième moteur 29 n'est plus situé sur la gaine 20 mais sur le support 32, et seule une extrémité des quatrième câble 28 court sur le bras 21 et est accrochée à lui ; le complément 28" du câble 28 s'étend sur le support 32 jusqu'au moteur 29 d'où il se déroule. De plus, l'un des trois premiers câbles, par exemple 27, s'étend au-delà du dispositif d'accrochage 33 et pénètre dans la gaine 20, et son extrémité est accrochée au bras 21. Ainsi, la raideur à l'extension du bras 21 est produite par le moteur 18 de ce câble 27 et la raideur d'enfoncement du bras 21 est produite par le moteur 29 du quatrième câble 28. Le moteur 18 sert aussi, comme précédemment, à réagir aux mouvements d'inclinaison de la gaine 20, comme les moteurs 16 et 17.

Un autre mode de réalisation non représenté utilise un câble attaché à ses deux extrémités au bras 24, comme sur les figures 2 et 3, avec un moteur déporté sur le support 32 comme sur la figure 4.

La figure 5 illustre un organe composite composé d'une paire d'organes de commande de l'invention (par exemple de la figure 4), les deux bras 21 étant sensiblement parallèles et leurs poignets 23 étant réunis par une tige de liaison 34 porteuse du stylo 24. L'organe de commande ainsi constitué présente cinq degrés de liberté sans qu'on ait à utiliser de poignet à structure compliquée, comme pour les réalisations précédentes. Il est à noter que les deux organes élémentaires peuvent être assez rapprochés l'un de l'autre sans produire de risque de singularité important.

L'organe de commande proposé ici offre donc une structure particulièrement simple. Il peut être appliqué aux principaux domaines de la commande par un bras maître, traditionnels ou en développement, comme la télémanipulation, la téléchirurgie, les jeux, la conception assistée par ordinateur, etc.

## Revendications

1. Organe de commande du type à câbles tendus disposé entre une embase (15) et un poignet mobile (23), l'organe comprenant: une gaine (20) jointe à l'embase par une articulation double (19) ; trois câbles (25, 26, 27) d'actionnement, entre la gaine et l'embase, et se raccordant à l'embase en autant de points de raccordement entourant la gaine ; un bras (21) porteur du poignet (23), coulissant dans la gaine ; et au moins un moyen (28, 29) d'actionnement entre le bras et la gaine, les câbles et le moyen d'actionnement assurant le contrôle de mouvements de l'organe.

2. Organe de commande selon la revendication 1, **caractérisé en ce que** le moyen d'actionnement comprend un câble (28) tendu entre la gaine (20) et le bras (21) et commandé par un moteur (29), et **en ce que** les trois câbles tendus entre la gaine (20) et l'embase (15) sont commandés par des moteurs respectifs (16, 17, 18).

3. Organe de commande selon la revendication 1, **caractérisé en ce que** le moyen d'actionnement comprend un câble (28) tendu entre le bras (21) et l'embase (32) et commandé par un moteur placé sur l'embase, **en ce que** les trois câbles tendus entre la gaine et l'embase sont commandés par des moteurs respectifs, et un des trois câbles s'étend au-delà de la gaine jusqu'à un point d'accrochage au bras.

4. Organe de commande selon l'une quelconque des revendications 1 à 3, **caractérisé en ce que** les trois câbles (25, 26, 27) sont disposés en arêtes de pyramide, et l'articulation double (19) est entourée par les points de raccordement des câbles à l'embase.

5. Organe de commande selon l'une quelconque des revendications 1 à 4, **caractérisé en ce que** les trois câbles sont sensiblement coplanaires et l'articulation double (19) est placée en un endroit de la gaine (20) d'où sort le bras (21).

6. Organe de commande selon l'une quelconque des revendications 1 à 5, **caractérisé en ce que** l'articulation double est une rotule.

7. Organe de commande selon l'une quelconque des revendications 1 à 5, **caractérisé en ce que** le bras est pivotant dans la gaine.

8. Organe de commande composé, **caractérisé en ce qu'**il comprend une paire d'organes conformes à l'une quelconque des revendications précédentes, l'embase étant commune aux organes, les bras étant réunis à une poignée commune par des rotules.

## Claims

1. Control unit of the type with tensed cables arranged between a base (15) and a movable wrist (23), the unit comprising: a sheath (20) joined to the base by a double joint (19); three actuating cables (25, 26, 27) between the sheath and the base and connecting to the base at the same number of connecting points surrounding the sheath; an arm (21) supporting the wrist (23), sliding into the sheath; and at least one actuating means (28, 29) between the arm and the sheath, the cables and the actuating means ensuring the control of movements of the unit.

2. Control unit as claimed in claim 1, **characterized in that** the actuating means includes a cable (28) stretched between the sheath (20) and the arm (21) and controlled by a motor (29), and **in that** the three cables stretched between the sheath (20) and the base (15) are controlled by respective motors (16, 17, 18).

3. Control unit as claimed in claim 1, **characterized in that** the actuating means includes a cable (28) stretched between the arm (21) and the base (32) and controlled by a motor placed on the base, **in that** the three cables stretched between the sheath and the base are controlled by respective motors, and one of the three cables extends beyond the sheath to a fastening point on the arm.

4. Control unit as claimed in any of claims 1 to 3, **characterized in that** the three cables (25, 26, 27) are arranged like the edges of a pyramid, and the double joint (19) is surrounded by the connecting points of the cables to the base.

5. Control unit as claimed in any of claims 1 to 4, **characterized in that** the three cables are substantially coplanar and the double joint (19) is placed at a location of the sheath (20) from which the arm (21) exits.

6. Control unit as claimed in any of claims 1 to 5, **characterized in that** the double joint is a ball joint.

7. Control unit as claimed in any of claims 1 to 5, **characterized in that** the arm is capable of being rotated inside the sheath.

8. Composite control unit, **characterized in that** it includes a pair of units according to any of the preceding claims, the base being common to the units, the arms being joined to a common wrist by ball joints.

## Patentansprüche

1. Steuerglied des Typs mit angespannten Kabeln, angeordnet zwischen einem Sockel (15) und einem bewegbaren Gelenk (23), wobei das Glied umfasst: eine mit dem Sockel durch ein Doppelgelenk (19) verbundene Hülse (20); drei Betätigungskabel (25, 26, 27) zwischen der Hülse und dem Sockel, die in ebenso vielen die Hülse umgebenden Anschlusspunkten mit dem Sockel verbunden sind; einen in der Hülse verschiebbaren Trägerarm (21) des Gelenks (23); und wenigstens eine Betätigungseinrichtung (28, 29) zwischen dem Arm und der Hülse, wobei die Kabel und die Betätigungseinrichtung die Kontrolle von Bewegungen des Glieds gewährleisten.

2. Steuerglied nach Anspruch 1, **dadurch gekennzeichnet, dass** die Betätigungseinrichtung ein Kabel (28) umfasst, gespannt zwischen der Hülse (20) und dem Arm (21) und gesteuert bzw. kontrolliert durch einen Motor (29), und **dadurch**, dass die drei zwischen der Hülse (20) und dem Sockel (15) gespannten Kabel durch jeweilige Motoren (16, 17, 18) kontrolliert werden.

3. Steuerglied nach Anspruch 1, **dadurch gekennzeichnet, dass** die Betätigungseinrichtung ein Kabel (28) umfasst, gespannt zwischen dem Arm (21) und dem Sockel (32) und kontrolliert durch einen auf dem Sockel angeordneten Motor, und **dadurch**, dass die drei zwischen der Hülse und dem Sockel gespannten Kabel durch jeweilige Motoren kontrolliert werden und eines der drei Kabel sich weiter als bis zur Hülse bis zu einem Befestigungspunkt am Arm erstreckt.

4. Steuerglied nach einem der Ansprüche 1 bis 3, **dadurch gekennzeichnet, dass** die drei Kabel (25, 26, 27) pyramidenkantenförmig angeordnet sind und das Doppelgelenk (19) von Befestigungspunkten der Kabel an dem Sockel umgeben ist.

5. Steuerglied nach einem der Ansprüche 1 bis 4, **dadurch gekennzeichnet, dass** die drei Kabel im Wesentlichen koplanar sind und das Doppelgelenk (19) sich an einer Stelle der Hülse (20) befindet, wo der Arm (21) austritt.

6. Steuerglied nach einem der Ansprüche 1 bis 5, **dadurch gekennzeichnet, dass** das Doppelgelenk ein Kugelgelenk ist.

7. Steuerglied nach einem der Ansprüche 1 bis 5, **dadurch gekennzeichnet, dass** der Arm in der Hülse drehbar ist.

8. Zusammengesetztes Steuerglied, **dadurch gekennzeichnet, dass** es ein Paar von - einem der vorangehenden Ansprüche entsprechenden - Gliedern mit einem gemeinsamen Sockel umfasst, wobei die Arme durch Kugelgelenke mit einem gemeinsamen Griffstück verbunden sind.
